# EUROPEAN PATENT APPLICATION

(11) **EP 2 819 341 A1**
(43) Date of publication of application: **31.12.2014**
(21) Application number: 13751173.9
(22) Date of filing: 19.02.2013
(51) Int. Cl.: H04L 9/32

(54) **METHOD AND DEVICE FOR ACHIEVING DATA ROAMING**

(30) Priority: 24.02.2012 CN 201210044064
(71) Applicant: Tencent Technology Shenzhen Company Limited, Shenzhen, Guangdong 518044 (CN)
(72) Inventor: LAO, Ning, Shenzhen Guangdong 518044 (CN)
(74) Representative: Eisenführ Speiser
(86) International application number: PCT/CN2013/071666
(87) International publication number: WO 2013/123870

(57) **Abstract**

The present invention is applied to the field of computer network communications, and provided are a method and device for achieving data roaming. The method comprises: a client obtaining a data roaming voucher uniquely corresponding to user logon information; the client sending a data roaming request with the data roaming voucher to a data roaming server; and according to the data roaming voucher contained in the received data roaming request, the data roaming server verifying whether the data roaming request is valid, and transmitting roaming data between the client and the data roaming server if the data roaming request is valid. Before data communication is conducted between a client and a data roaming server, the step of verifying the validity of a user data roaming request is also required, and thus, the present invention can achieve the secure isolation of user information. In addition, the data roaming server uses a user network system structure in a catalogue form, thereby ensuring the file locating expandability and universality.

## Description

### TECHNICAL FIELD

The invention relates to the field of computer network communication, and in particular, to a universal method and device for achieving data roaming.

### BACKGROUND

Data roaming refers to uploading data to a network server to save, so the data may be operated arbitrarily anywhere. The data may be a text, a video and any other relatively safe data. With the existing data roaming technology, latest application data may be synchronized to and obtained by clients in various devices and networks, and a user may conveniently update data, which is stored on one device terminal by the user, on other device terminals by data roaming without a data storage device, hence data sharing is achieved.

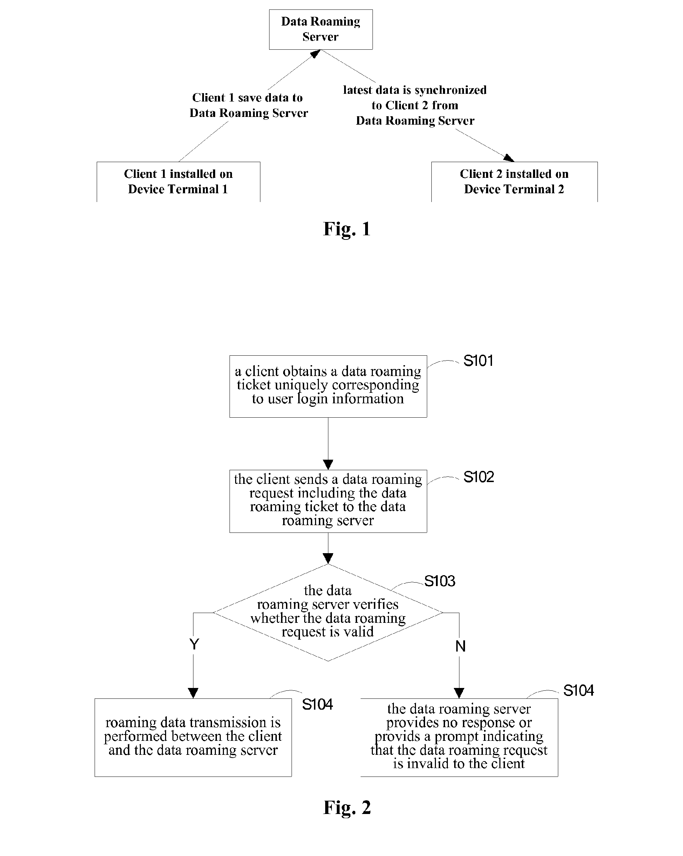

Figure 1 illustrates a structure diagram of an existing data roaming system model. The model includes a data roaming server and multiple clients distributed on various device terminals and networks, and the data roaming server and the clients are connected through a network. The data roaming server is mainly adapted to save data uploaded by the clients and synchronize user data to other clients, where the clients uploading the data are data producers and the clients which the data is synchronized to are data consumers, and in this way, a complete frame including uploading and downloading is formed. A situation with two clients is taken as an example in Figure 1, a user uploads personal data to the data roaming server by a client 1 installed on a device terminal 1, and synchronizes the personal data saved in the data roaming server to a client 2 installed on a device terminal 2 by the client 2 when data synchronization is required, then further saves the data on the device terminal 2.

The existing data roaming technology has obvious disadvantages that: user data can not be isolated from each other with the existing data roaming model, and after one user uploads the personal data to the data roaming server, data synchronization may be requested by other users without verification, therefore, a user may modify and utilize the personal roaming data of other users arbitrarily and thus the user privacy is not well protected.

### SUMMARY

In view of the problems above, a method for data roaming is provided according to the invention, to increase the safety of the information of personal roaming data of a user.

The method for data roaming includes the following steps:
obtaining a data roaming ticket uniquely corresponding to user login information by a client;
sending a data roaming request including the data roaming ticket to a data roaming server by the client;
verifying whether the data roaming request is valid by the data roaming server based on the data roaming ticket included in the received data roaming request, and performing roaming data transmission between the client and the data roaming server if the data roaming request is valid.

Furthermore, the step of obtaining the data roaming ticket uniquely corresponding to the user login information by the client includes:
logging in an account management server and sending a roaming ticket application including the user login information to the account management server, by the client;
verifying validity of a logged-in user by the account management server based on the received roaming ticket application and forwarding the roaming ticket application to the data roaming server if the logged-in user is verified as valid;
generating the uniquely corresponding data roaming ticket based on the user login information included in the received roaming ticket application and forwarding the data roaming ticket to the client through the account management server, by the data roaming server; and
receiving the data roaming ticket forwarded by the account management server by the client.

Another object of the invention is to provide a device for data roaming, and the device includes:
a ticket obtaining unit, which is adapted to obtain a data roaming ticket uniquely corresponding to user login information;
a roaming request unit, which is adapted to send a data roaming request including the data roaming ticket to a ticket verification unit;
the ticket verification unit, which is adapted to verify whether the data roaming request is valid based on the data roaming ticket included in the received data roaming request, where roaming data transmission is performed between a client and a data roaming server if the data roaming request is valid.

Furthermore, the ticket obtaining unit includes:
an application sending module, which is adapted to log in an account management server and send a roaming ticket application including the user login information to a verification forwarding module;
the verification forwarding module, which is adapted to verify validity of a logged-in user based on the received roaming ticket application and forward the roaming ticket application to a ticket generation module if the logged-in user is verified as valid;
the ticket generation module, which is adapted to generate the uniquely corresponding data roaming ticket based on the user login information included in the received roaming ticket application and forward the data roaming ticket to a ticket obtaining module through the account management server; and
the ticket obtaining module, which is adapted to receive the data roaming ticket forwarded by the account management server.

One advantage of the invention is as follows: in the method for data roaming provided according to embodiments of the invention, validity of the data roaming request of the user is verified before performing data communication between the client and the data roaming server, therefore, since other users do not have the data roaming ticket corresponding to the user and can not obtain the roaming data of the user by synchronization, user information may be isolated safely from each other.

Another advantage of the invention is as follows: in the device for data roaming provided according to embodiments of the invention, the ticket obtaining unit and the ticket verification unit are included, and the validity of the data roaming request of the user is verified before performing data communication between the client and the data roaming server, therefore, since other users do not have the data roaming ticket corresponding to the user and can not obtain the roaming data of the user by synchronization, user information may be isolated safely from each other, and the safety of the roaming data of the users is enhanced.

### BRIEF DESCRIPTION OF THE DRAWINGS

Figure 1 is a structure diagram of an existing data roaming system model.
Figure 2 is a flow chart of a method for data roaming according to a first embodiment of the invention.
Figure 3 is a sequence chart showing interaction among communication entities in a data roaming model according to a second embodiment of the invention.
Figure 4 is a diagram showing correspondence between a data roaming server and clients according to a third embodiment of the invention.
Figure 5 is a frame diagram to achieve data roaming function according to a fourth embodiment of the invention.
Figure 6 is a structure diagram of a device for data roaming according to a fifth embodiment of the invention.

### DETAILED DESCRIPTION

The invention is further explained hereinafter in conjunction with drawings and embodiments for better understanding of the objects, the technical solutions and the advantages of the invention. It should be understood that, embodiments described here are only intended to explain the invention, rather than limit the invention.

The embodiments of the invention relate to data communication, which is implemented by network flow connection, between a client and a data roaming server. There may be more than one clients which may be installed on various device terminals, the approach to implement the data communication includes: uploading user data to the data roaming server by the client and synchronizing user roaming data to other clients by the data roaming server. User verification needs to be performed before the data communication, and the user roaming data stored on the data roaming server is only synchronized to users passing the verification. For example, after an Instant Messager (IM) user logs in a client on a computer, the background of the client may request to upload a chatting record of the user to an IM data roaming server, which then stores the chatting record after the user is verified as valid by the IM data roaming server; the user may log in IM through a client of other computer and may request for data roaming to check the chatting record stored in the former computer, and the IM data roaming server may synchronize the chatting record data of the user stored in the server to the client if data roaming request of the user is verified as valid by the IM data roaming server. With this approach, the data in the chatting record is isolated and the chatting record of the user can not be obtained by other users.

### First Embodiment

Figure 2 illustrates a flow chart of a method for data roaming according to a first embodiment of the invention. The method is described in detail with the following steps.

In step S101, a client obtains a data roaming ticket uniquely corresponding to user login information.

According to the embodiment of the invention, the data roaming ticket is able to be recognized and confirmed by a data roaming server. In an implementation, the data roaming ticket uniquely identifies the user login information of the client; in particular, usually the user login information is an account uniquely identifying the user, and accordingly, the data roaming ticket may be a string of sequence codes including the account information, and the data roaming server may verify whether a current data roaming request is valid based on the sequence codes.

In step S102, the client sends the data roaming request including the data roaming ticket to the data roaming server.

According to the embodiment of the invention, the client installed on a device terminal stores a communication interface of the data roaming server, and the user may send the data roaming request directly to the data roaming server through a connection network of the device terminal. The device terminal is not limited to a computer.

In step S103, the data roaming server verifies whether the data roaming request is valid based on the data roaming ticket included in the received data roaming request.

According to the embodiment of the invention, whether user roaming data may be isolated from each other is determined by this step. Since the data roaming ticket is saved in the data roaming server when the user uploads the roaming data to the server by the client, the data roaming server may determine whether the request is valid by comparing the data roaming ticket saved in the server with the data roaming ticket included in the data roaming request.

In step S104, roaming data transmission is performed between the client and the data roaming server if the data roaming request is valid. The roaming data transmission includes uploading and synchronization of the data.

In step S105, the data roaming server provides no response or provides a prompt indicating that the data roaming request is invalid to the client if the data roaming request is invalid.

According to the embodiment, the data roaming server verifies whether the data roaming request of the client is valid by using the data roaming ticket, hence the security of data roaming is enhanced.

### Second Embodiment

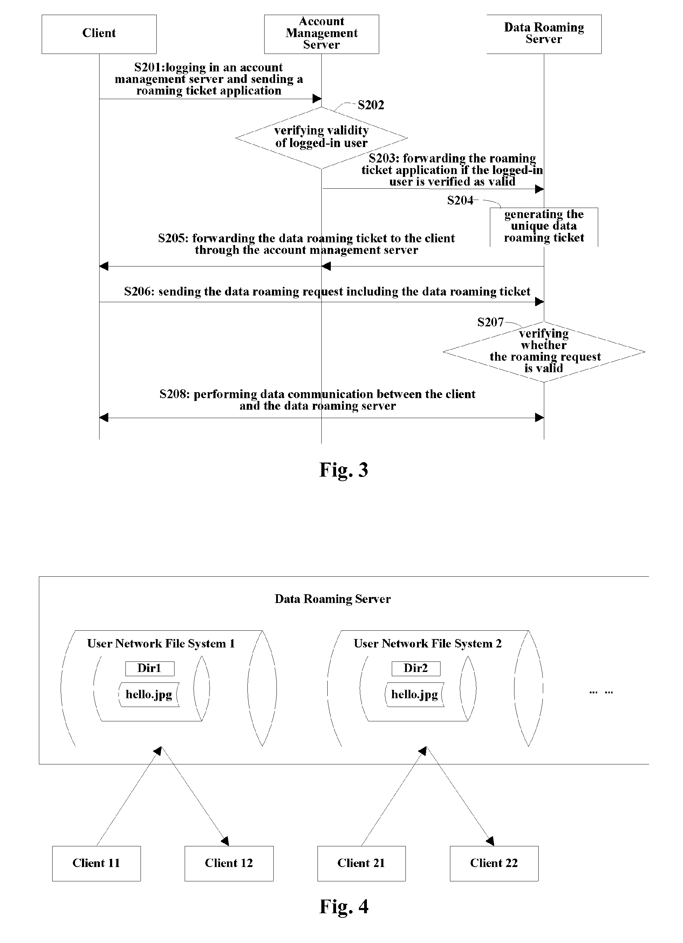

Figure 3 illustrates a sequence chart showing interaction among communication entities in a data roaming model according to a second embodiment of the invention. Each process for achieving data roaming is clearly described with this sequence chart. An approach of obtaining a data roaming ticket uniquely corresponding to user login information by a client is further defined preferably based on Figure 2. The method for data roaming according to this embodiment includes the following steps.

In step S201, the client logs in an account management server and sends a roaming ticket application including the user login information to the account management server.

According to the embodiment, the account management server is provided in order that the server may obtain the data roaming ticket. The account management server is adapted to verify the validity of the user, and the client knows a communication interface of the account management server. In an implementation, the client is automatically connected to the account management server through the communication interface when the user clicks a login button on the client.

In step S202, the account management server verifies the validity of a logged-in user based on the received roaming ticket application.

In an implementation, the account management server may verify whether the logged-in user is valid by using a password associated with a user login account set by the user; the current logged-in user is verified as a valid user if the password is right, and the current logged-in user is verified as an invalid user if the password is not right. In the case that an invalid logged-in user is detected, the account management server provides no response or provides a prompt of invalid user.

In step S203, the account management server forwards the roaming ticket application to the data roaming server if the logged-in user is verified as valid.

According to the embodiment of the invention, in order to decrease implementation difficulty and development cost, the account management server and the data roaming server trust each other, and the data roaming server does not verify whether the roaming ticket application forwarded by the account management server is valid.

In step S204, the data roaming server generates the uniquely corresponding data roaming ticket based on the user login information included in the received roaming ticket application.

According to the embodiment of the invention, the data roaming server adds the verification information to the received user login information and packaging them into the data roaming ticket. The data roaming ticket uniquely corresponds to the user login information.

In step S205, the data roaming ticket is forwarded to the client through the account management server.

According to the embodiment of the invention, since the account management server and the data roaming server trust each other, the account management server forward the data roaming ticket, which is sent by the data roaming server, to the client directly without verifying whether the data roaming ticket is valid.

In step S206, the client sends the data roaming request including the data roaming ticket to the data roaming server.

In step S207, the data roaming server verifies whether the data roaming request is valid based on the data roaming ticket included in the received data roaming request.

In step S208, if the data roaming request is valid, roaming data transmission is performed between the client and the data roaming server; and if the data roaming request is invalid, the data roaming server provides no response or sending a prompt indicating that the data roaming request is invalid to the client. Similarly, here the roaming data transmission includes the uploading and synchronization of the data.

According to the embodiment, the account management server is provided for verifying the validity of the user, and thus the security of data roaming is further enhanced.

### Third Embodiment

Figure 4 illustrates correspondence between a data roaming server and clients according to a third embodiment of the invention. The structure of the data roaming server is further described in the embodiment, and the expandability and universality of user roaming data locating are ensured by applying the data roaming server in this structure.

In the data roaming server according to the embodiment, each user is allocated with a user network file system for storing user data. The user network file systems are isolated from each other. A situation with two user network file systems is taken as an example in Figure 4.

The user network file system is similar to a local file system, and the file in the user network file system is stored in a root catalogue or a folder in the root catalogue. Here the user network file system of each user is one root catalogue and the corresponding user may establish a child catalogue or a file in the root catalogue. According to the embodiment of the invention, a relative path is used to identify and locate the catalogue and the file, and a sign of "/" is used to represent the root catalogue; for example, the path of the file named "Hello.jpg" in Figure 4 may be represent as /dir1/Hello.jpg.

According to the embodiment of the invention, after a data roaming request is verified as valid by the data roaming server, a client 11 uploads the data to the data roaming server, and the data roaming server automatically stores the uploaded data into a user network file system 1, where the data is stored in the form of catalogue and a relative path may be used to identify and locate the corresponding catalogue and user data; when the user needs to synchronize the roaming data, the data roaming server may check automatically the data in the user network file system 1 and synchronize the data to a client 12 after a sent data roaming request is verified as valid. A user network file system 2 functions with a similar approach. After the data roaming server allocates the user network file system for the user, the user network file system belongs to the user and the user may establish catalogues and files in the file system. The user may update and obtain the roaming data with an approach of file access based on the paths, and the expandability and universality of file locating are ensured.

### Fourth Embodiment

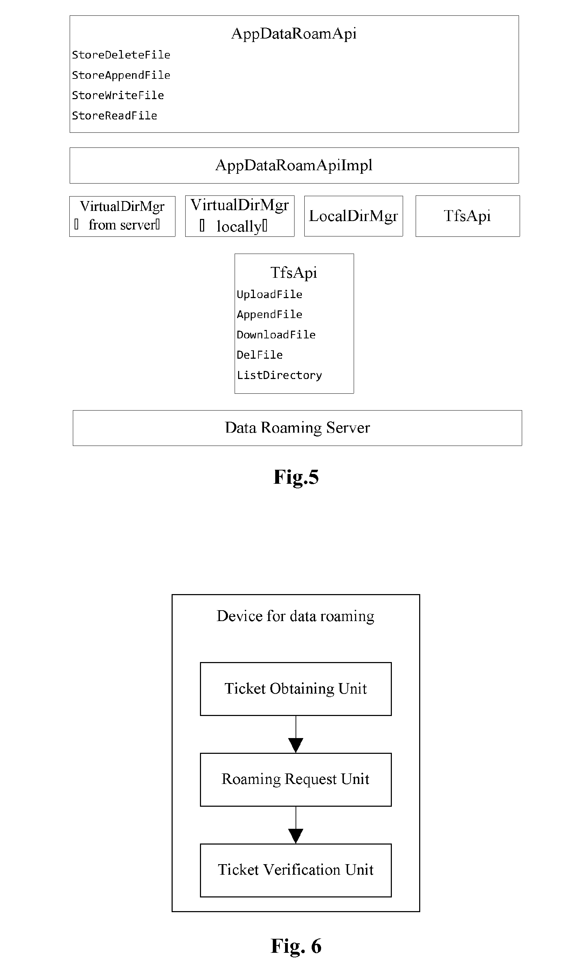

Figure 5 illustrates a frame diagram to achieve data roaming function according to a fourth embodiment of the invention. The frame diagram according to this embodiment is a structure diagram for achieving data transmission between a client and the data roaming server with a structure shown in Figure 4, which further proves that the technical solution of the invention is feasible.

The essence of roaming data transmission between the client and the data roaming server is to perform file operations on data in a user network file system corresponding to user login information, where the file operations include, for example, deleting a file, appending a file, writing a file and reading a file. There are different approaches to implement the corresponding operations.

The frame includes an interface layer (AppDataRoamApi), a system logic layer (AppDataRoamImpl, LocaldirMgr and VirtualDirMgr) adapted to implement the operations, a protocol layer (TfsApi) adapted to communicate with the data roaming server and a data roaming server (TFS Server). The interface layer provides basic file operation interfaces, including StoreDeleteFile, StoreAppendFile, StoreWriteFile and StoreReadFile corresponding to the operations of deleting, appending, writing and reading a file respectively. The VirtualDirMgr in the system logic layer is a virtual file system index tree identifying basic information such as the number of file system catalogues, the size and timestamp of the file. The VirtualDirMgr includes two parts, i.e., VirtualDirMgr (from server) and VirtualDirMgr (locally). During initialization, the VirtualDirMgr (from server) is adapted to pull a file system index and a file timestamp from the TFS Server by invoking a function of ListDirInfo in the TfsApi and generate a virtual file catalogue structure corresponding to a server file catalogue system. The VirtualDirMgr (locally) is adapted to load the file system index cached locally when exiting the client last time from a local terminal device where the client is installed. Differences between a local file and a user file uploaded to and stored in the server can be obtained by comparing the VirtualDirMgr (from server) and the VirtualDirMgr (locally), hence a specific file operation may further be performed as follows.

When it is required to establish a catalogue, delete a catalogue, delete a file, identify whether a local file is a latest one, the corresponding operations may be implemented by entrusting the LocaldirMgr.

When it is required to read a file by invoking the function of StoreReadFile, the operation is implemented through the interface of AppDataRoamApi as follows: firstly, querying whether the file exists in the server to the VirtualDirMgr (from server), and querying by the VirtualDirMgr (locally) whether the local file is updated to a latest one; then querying whether the file exists locally to the LocaldirMgr; if the file exists locally and is the latest, reading the file directly and then returning to an upper layer; and if the file does not exist locally or the file saved locally is not the latest and the file exists in the server, invoking a function of DownloadFile in the protocol layer TfsApi to pull the latest file from the server, and after pulling successfully, updating by the VirtualDirMgr (locally) the timestamp of the file and an identifier showing whether the file is the latest, storing the pulled file locally by the LocalDirMgr, then reading the content of the file and returning to the upper layer.

When it is required to invoke other functions in the interface layer AppDataRoamApi to perform corresponding operations, the corresponding functions in the TfsApi are directly transferred to for interacting with the server, and after the operation is performed successfully, the VirtualDirMgr and LocalDirMgr are entrusted to update the information of the file system and update the local file system respectively.

The data roaming according to the former embodiments is implemented with the frame for achieving data roaming according to the embodiment. It should be noted that, only one frame model for achieving basic functions of data roaming is given according to the embodiment of the invention, which is not intended to limit the invention, and any change or equivalent substitution based on the embodiment falls within the protection scope of the invention.

### Fifth Embodiment

Figure 6 illustrates the structure of a device for data roaming according to a fifth embodiment of the invention, only parts related to the embodiment are shown in Figure 6 for convenience of illustration.

The device for data roaming includes:
a ticket obtaining unit, which is adapted to obtain a data roaming ticket uniquely corresponding to user login information;
a roaming request unit, which is adapted to send a data roaming request including the data roaming ticket to a ticket verification unit; and
the ticket verification unit, which is adapted to verify whether the data roaming request is valid based on the data roaming ticket included in the received data roaming request, where roaming data transmission is performed between a client and a data roaming server if the data roaming request is valid.

Preferably, the ticket obtaining unit includes:
an application sending module, which is adapted to log in an account management server and send a roaming ticket application including the user login information to a verification forwarding module;
the verification forwarding module, which is adapted to verify the validity of a logged-in user based on received roaming ticket application and forward the roaming ticket application to a ticket generation module if the user is verified as valid;
the ticket generation module, which is adapted to generate the uniquely corresponding data roaming ticket based on the user login information included in the received roaming ticket application and forward the data roaming ticket to a ticket obtaining module through the account management server; and
the ticket obtaining module, which is adapted to receive the data roaming ticket forwarded by the account management server.

Furthermore, the roaming request module includes:
a file allocation module, which is adapted to allocate a user network file system to store user data for each user, where the user data in the user network file system exists in the form of catalogue, and the corresponding catalogue and user data are identified and located through a relative path.

Furthermore, the file allocation module includes:
an index establishment device, which is adapted to establish a virtual file index corresponding to a catalogue structure system and a local file index adapted to load data saved locally and recently, where a local file operation is performed by comparing the two indexes and invoking a file operation interface function.

Compared with the devices for data roaming in the prior art, the user roaming data is isolated by providing the ticket obtaining unit and the ticket verification unit in the device for data roaming according to the embodiment. In addition, user network system structure in the form of catalogue is applied in the data roaming server, and the expandability and universality of file locating are ensured.

Another device for data roaming is further provided according to an embodiment of the invention, and the device includes: a storage, which is adapted to store instructions; and a processor, which is coupled with the storage. The processor is configured to execute the instructions stored in the storage and execute all the method embodiments for achieving the data roaming. In addition, a machine readable medium is further provided according to an embodiment of the invention and an instruction set is stored in the medium, where all the method embodiments for achieving data roaming may be executed by the machine when the instruction set is executed.

The embodiments described above are only preferable embodiments of the invention, which are not intended to limit the invention. Any change, equivalent substitution or improvement without departing from the spirit and principle of the invention should fall within the protection scope of the invention.

## Claims

1. A method for data roaming, comprising:
obtaining, by a client, a data roaming ticket uniquely corresponding to user login information;
sending, by the client, a data roaming request comprising the data roaming ticket to a data roaming server;
verifying, by the data roaming server, whether the data roaming request is valid based on the data roaming ticket comprised in the received data roaming request; and
performing roaming data transmission between the client and the data roaming server if the data roaming request is valid.

2. The method for data roaming according to claim 1, wherein if the data roaming request is invalid, the data roaming server provides no response or provides to the client a prompt indicating that the data roaming request is invalid.

3. The method for data roaming according to claim 1, wherein the obtaining, by a client, a data roaming ticket uniquely corresponding to user login information comprises:
logging in an account management server and sending a roaming ticket application comprising the user login information to the account management server, by the client;
verifying validity of a logged-in user based on the received roaming ticket application and forwarding the roaming ticket application to the data roaming server if the logged-in user is verified as valid, by the account management server;
generating the uniquely corresponding data roaming ticket based on the user login information comprised in the received roaming ticket application and forwarding the data roaming ticket to the client through the account management server, by the data roaming server; and
receiving the data roaming ticket forwarded by the account management server by the client.

4. The method for data roaming according to claim 3, wherein the account management server and the data roaming server are trustable to each other and no validity verification of a request is performed between the account management server and the data roaming server during communication.

5. The method for data roaming according to any one of claims 1-4, wherein the performing roaming data transmission between the client and the data roaming server comprises:
uploading user data to the data roaming server by the client and synchronizing stored corresponding user data to the client by the data roaming server.

6. The method for data roaming according to claim 5, wherein the data roaming server allocates a user network file system to store user data for each user, wherein the user data in the user network file system exists in a form of catalogue, and corresponding catalogue and user data are identified and located through a relative path.

7. The method for data roaming according to claim 6, wherein the user network file system establishes a virtual file index corresponding to a catalogue structure system of the user network file system and a local file index adapted to load data saved locally and recently, wherein a local file operation is performed by comparing the two indexes and invoking a file operation interface function.

8. The method for data roaming according to claim 7, wherein a file reading operation of the file operation comprises:
checking whether a file to be read exists locally and whether the file is a latest one;
reading the file directly if the file exists locally and the file is the latest one;
otherwise, pulling directly the file and updating a timestamp and a latest identifier in a case that the file exists in the virtual file index, and giving a prompt indicating that the file reading operation is failed by the user network file system in a case that the file does not exist in the virtual file index.

9. A device for data roaming, comprising:
a ticket obtaining unit, which is adapted to obtain a data roaming ticket uniquely corresponding to user login information;
a roaming request unit, which is adapted to send a data roaming request comprising the data roaming ticket to a ticket verification unit; and
the ticket verification unit, which is adapted to verify whether the data roaming request is valid based on the data roaming ticket comprised in the received data roaming request,
wherein data roaming transmission is performed between a client and a data roaming server if the data roaming request is valid.

10. The device for data roaming according to claim 9, wherein the ticket obtaining unit comprises:
an application sending module, which is adapted to log in an account management server and send a roaming ticket application comprising the user login information to a verification forwarding module;
the verification forwarding module, which is adapted to verify validity of a logged-in user based on the received roaming ticket application and forward the roaming ticket application to a ticket generation module if the logged-in user is verified as valid;
the ticket generation module, which is adapted to generate the uniquely corresponding data roaming ticket based on the user login information comprised in the received roaming ticket application and forward the data roaming ticket to a ticket obtaining module through the account management server; and
the ticket obtaining module, which is adapted to receive the data roaming ticket forwarded by the account management server.

11. The device for data roaming according to claim 9, wherein the roaming request unit comprises:
a file allocation module, which is adapted to allocate a user network file system to store user data for each user, wherein the user data in the user network file system exists in a form of catalogue, and corresponding catalogue and user data are identified and located through a relative path.

12. The device for data roaming according to claim 11, wherein the file allocation module comprises:
an index establishment device, which is adapted to establish a virtual file index corresponding to a catalogue structure system and a local file index adapted to load data saved locally and recently, wherein a local file operation is performed by comparing the two indexes and invoking a file operation interface function.
